# EUROPÄISCHE PATENTSCHRIFT

(11) **EP 2 977 191 B1**
(45) Veröffentlichungstag und Bekanntmachung des Hinweises auf die Patenterteilung: **03.01.2018**
(21) Anmeldenummer: 15176565.8
(22) Anmeldetag: 14.07.2015
(51) Int. Cl.: B29D 23/00, B32B 25/10, B32B 27/12, F16L 11/08

(54) **VERFAHREN ZUR HERSTELLUNG VON SCHLAUCHROHLINGEN**
METHOD FOR THE FABRICATION OF HOSE BLANKS
PROCEDE DE FABRICATION D'EBAUCHES DE TUYAU

(30) Priorität: 21.07.2014 DE 102014110214
(43) Veröffentlichungstag der Anmeldung: 27.01.2016
(73) Patentinhaber: VERITAS AG, 63571 Gelnhausen (DE)
(72) Erfinder: Hummel, Gerhard, 63633 Birstein (DE); Schulz, Volker, 63607 Wächtersbach (DE); Hattaß, Dirk, 63584 Gründau (DE)
(74) Vertreter: Patentship Patentanwaltsgesellschaft mbH

(56) Entgegenhaltungen:
- EP-A2- 2 290 278
- US-A- 3 953 270
- US-A- 4 238 260
- US-A1- 2010 266 789
- US-B1- 6 695 015

## Beschreibung

Die vorliegende Erfindung betrifft ein Verfahren zur Herstellung eines Schlauchrohlings, beispielsweise für Ladeluftschläuche in einem Kraftfahrzeug. Die Druckschrift EP-A-2 290 278 und DE 10 2010 000 180 A1 beschreibt einen schlauchförmigen Artikel mit einer Innenschicht und einer Außenschicht, die jeweils aus einem polymeren Werkstoff mit elastischen Eigenschaften bestehen, und einer Festigkeitsträgerschicht.

Die Druckschrift EP 2 422 966 A1 beschreibt ein Verfahren zur Herstellung von Ladeluftschläuchen für Kraftfahrzeuge. Bei diesem Verfahren wird mittels einer dornlosen Extrusion mit pneumatischem Innendruck ein kontinuierlicher Inliner hergestellt. Sukzessive werden dann kontinuierlich eine elastomere Innenlage, eine erste Gestricklage, eine elastomere Zwischenlage, eine zweite Gestricklage und eine elastomere Außenlage auf den Inliner aufgebracht.

Die Druckschrift US 6,695,015 B1 beschreibt einen Bremsgummischlauch, welcher in einer Bremse eines Kraftfahrzeuges verwendet wird. Bei der Herstellung des Bremsgummischlauchs wird eine innere Gummischicht um einen langen Dorn unter Verwendung eines Extruders extrudiert. Anschließend wird eine erste Verstärkungsschicht auf die äußere Oberfläche der inneren Gummischicht durch eine Flechtmaschine aufgeflochten. Nach einer Beschichtung der ersten Verstärkungsschicht mit einer Harzlösung wird durch eine Flechtmaschine eine zweite Verstärkungsschicht auf die erste Verstärkungsschicht aufgeflochten. Abschließend wird durch einen Extruder auf die zweite Verstärkungsschicht eine äußere Gummischicht extrudiert. Obwohl der dornlose Innerliner mit einem pneumatischen Innendruck beaufschlagt ist, wird dieser beim Einstricken durch die Fadenspannung der Gestricklagen komprimiert. Dadurch erhöht sich die Fertigungstoleranz des Ladeluftschlauchs.

Es ist die der Erfindung zugrundeliegende Aufgabe, ein Verfahren zur Herstellung von Schläuchen anzugeben, mit dem Schläuche mit einer hohen Präzision hergestellt werden können.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Verfahren zur Herstellung eines Schlauchrohlings gelöst, mit den Schritten eines Extrudierens zumindest einer Innenschicht des Schlauchrohlings auf einen umfangsstabilen Stützdorn; und eines Aufstrickens eines textilen Druckträgers des Schlauchrohlings auf die Innenschicht, die von dem umfangstabilen Stützdorn abgestützt wird, wobei für die unterschiedlichen Verstärkungsschichten auch unterschiedliche Fadenmaterialien verwendet werden. Dadurch wird beispielsweise der technische Vorteil erreicht, dass eine Kompression des Schlauchrohlings beim Aufstricken des Druckträgers verhindert wird. Der Schlauchrohling kann dadurch präzise mit einem Innendurchmesser hergestellt werden, der dem Außendurchmesser des Stützdorns entspricht. Eine Ausschussrate bei der Produktion des Schlauchrohlings wird gesenkt, die Herstellung vereinfacht sich und eine verbesserte Druckstabilität des Schlauchs wird erzielt. Eine Nachbearbeitung des Schlauchrohlings mittels eines spanabhebenden Verfahrens kann entfallen und die Reinheit des Schlauchrohlings wird verbessert.

In einer vorteilhaften Ausführungsform des Verfahrens umfasst das Verfahren den Schritt eines Aufbringens einer Zwischenschicht des Schlauchrohlings auf den textilen Druckträger. Dadurch wird beispielsweise der technische Vorteil erreicht, dass die Festigkeit des Schlauchrohlings erhöht wird.

In einer weiteren vorteilhaften Ausführungsform des Verfahrens umfasst das Verfahren den Schritt eines Aufstrickens eines weiteren textilen Druckträgers auf die Zwischenschicht, die von dem umfangstabilen Stützdorn abgestützt wird. Dadurch wird beispielsweise der technische Vorteil erreicht, dass sich die Druckfestigkeit des Schlauches erhöht, der aus dem Schlauchrohling hergestellt wird.

In einer weiteren vorteilhaften Ausführungsform des Verfahrens ist eine Fadenspannung des ersten textilen Druckträgers unterschiedlich zu der Fadenspannung des zweiten textilen Druckträgers. Dadurch wird beispielsweise der technische Vorteil erreicht, dass die Fadenspannungen der einzelnen Lagen der Druckträger unterschiedlich einstellbar und steuerbar sind.

In einer weiteren vorteilhaften Ausführungsform des Verfahrens ist die Fadenspannung des ersten textilen Druckträgers geringer als die Fadenspannung des zweiten textilen Druckträgers. Dadurch wird beispielsweise der technische Vorteil erreicht, dass die inneren Schichten und die äußeren Schichten aneinandergedrückt werden und sich die Verbindung zwischen den Schichten verbessert. Des Weiteren kann sich hierdurch bei Druckbeaufschlagung des Schlauches die innere Druckträgerschicht gegen die äußere abstützen. Somit wird ein gleichmäßiges Wirken beider Druckträgerschichten erzielt.

In einer weiteren vorteilhaften Ausführungsform des Verfahrens ist ein Strickbild des ersten textilen Druckträgers unterschiedlich zu dem Strickbild des zweiten textilen Druckträgers. Dadurch wird beispielsweise der technische Vorteil erreicht, dass die Strickbilder der einzelnen Lagen der Druckträger unterschiedlich einstellbar und steuerbar sind.

Dadurch wird beispielsweise der technische Vorteil erreicht, dass je nach Druckträger unterschiedliche Materialien verwendet werden können.

In einer weiteren vorteilhaften Ausführungsform des Verfahrens umfasst das Verfahren den Schritt eines Aufbringens einer Deckschicht auf den weiteren textilen Druckträger. Dadurch wird beispielsweise der technische Vorteil erreicht, dass eine Beschädigung des Druckträgers verhindert werden kann.

In einer weiteren vorteilhaften Ausführungsform des Verfahrens umfasst das Verfahren den Schritt eines Umwickelns der äußeren Deckschicht des Schlauchrohlings mit einem Kompressionsband. Das Umwickeln erfolgt erst nach einem Aufbringen der letzten Deckschicht. Dadurch wird beispielsweise der technische Vorteil erreicht, dass ein Durchdringen der Maschen des Druckträgers erhöht wird und chemische Reaktionen zwischen den Schichten beschleunigt werden. Zudem ebenso die Lagerstabilität des Rohlings verbessert.

In einer weiteren vorteilhaften Ausführungsform des Verfahrens umfasst das Verfahren den Schritt eines Entfernens des Kompressionsbandes unmittelbar vor einer Weiterverarbeitung des Schlauchrohlings zur Formgebung. Das Entfernen erfolgt unmittelbar vor dem Weiterverarbeiten zur Formgebung. Dadurch wird beispielsweise der technische Vorteil erreicht, dass eine einheitliche Formschlauchherstellung gewährleistet wird.

In einer weiteren vorteilhaften Ausführungsform des Verfahrens umfasst das Verfahren den Schritt eines Entfernens des Stützdorns unmittelbar vor Weiterverarbeitung zur Formgebung des Schlauchrohlings. Dadurch wird beispielsweise der technische Vorteil erreicht, dass der Schlauchrohling von Innen und von Außen vulkanisiert werden kann. Die Entfernung des Stützdorns kann unmittelbar vor der Weiterverarbeitung zur Formgebung erfolgen, so dass eine verbesserte chemische Reaktion zwischen den Schichten gewährleistet wird und sich die Lagerstabilität des Rohlings verbessert.

In einer weiteren vorteilhaften Ausführungsform des Verfahrens ist der Stützdorn aus Stahl oder Kunststoff gebildet. Dadurch wird beispielsweise der technische Vorteil erreicht, dass der Stützdorn eine hohe Umfangsstabilität aufweist.

In einer weiteren vorteilhaften Ausführungsform des Verfahrens ist der Stützdorn biegesteif. Dadurch wird beispielsweise der technische Vorteil erreicht, dass ein gerader Schlauchrohling hergestellt werden kann.

In einer weiteren vorteilhaften Ausführungsform des Verfahrens ist der Stützdorn durch einen zylindrischen Hohlkörper gebildet. Dadurch wird beispielsweise der technische Vorteil erreicht, dass der Stützdorn mit einem geringen Materialeinsatz gebildet wird.

Gemäß einem zweiten Aspekt wird die Aufgabe durch einen Schlauchrohling gelöst, der mit einem Verfahren nach einem der Ansprüche hergestellt worden ist. Dadurch wird beispielsweise der technische Vorteil erreicht, dass ein Schlauch mit einer hohen Präzision gefertigt werden kann. Zudem wird eine besseren und höhere Druckstabilität bei höheren Drücken erzielt, beispielsweise bei einem Überdruck von größer als 3 Bar.

Ausführungsbeispiele der Erfindung sind in den Zeichnungen dargestellt und werden im Folgenden näher beschrieben.

Es zeigen:
- Fig. 1: eine schematische Ansicht eines Schlauchrohlings;
- Fig. 2: eine schematische Ansicht eines weiteren Schlauchrohlings; und
- Fig. 3: ein Blockdiagramm des Verfahrens zur Herstellung des Schlauchrohlings.

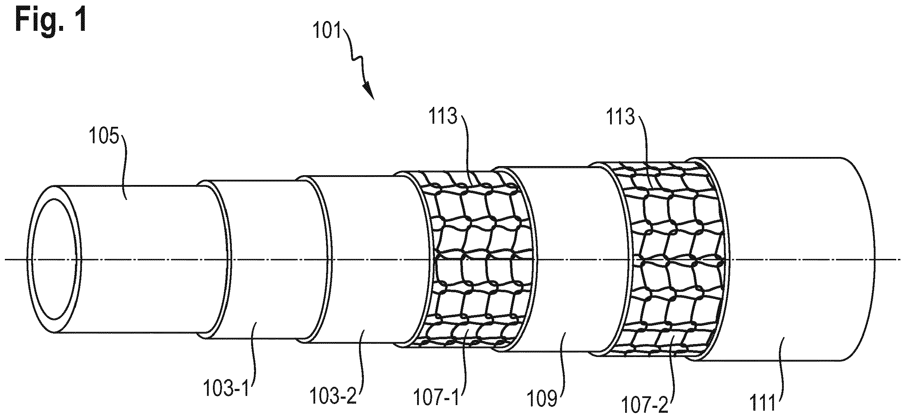

Fig. 1 zeigt eine schematische Ansicht eines Schlauchrohlings 101. Der Schlauchrohling 101 kann zur Herstellung eines mehrschichtigen Druckschlauchs zur flexiblen Verbindung von Komponenten innerhalb einer Ladeluftleitung eines Kraftfahrzeugs mit definierten und reproduzierbaren Dämpfungseigenschaften verwendet werden.

Der Schlauchrohling 101 umfasst eine erste Innenschicht 103-1, die als säurebeständige Sperrschicht ausgebildet sein kann und eine zweite Innenschicht 103-2, die als Zwischenlage oder Zwischenschicht ausgebildet ist. Die Innenschicht 103-1 ist beispielsweise aus Fluorkarbon-Kautschuk gebildet. Die Innenschichten 103-1 und 103-2 werden auf einem Stützdorn 105 extrudiert. Beim Extrudieren wird die Masse der Innenschicht 103-1 und 103-2 unter Druck kontinuierlich aus einer formgebenden Öffnung herausgepresst. Dadurch können Schlauchrochlinge 101 mit dem Querschnitt der Öffnung in theoretisch beliebiger Länge gebildet werden.

Weiter umfasst der Schlauchrohling 101 einen textilen Druckträger 107-1 vorzugsweise in Form eines Gestricks oder Geflechts. Der textile Druckträger 107-1 des Schlauchrohlings 101, der aus mehreren Einzelfäden bestehen kann, wird mittels einer entsprechenden Fertigungseinrichtung anwendungsspezifisch in unterschiedlichen Ausführungsarten auf die Innenschicht 103-2 mittels eines Fadens 113 aufgebracht, beispielsweise gestrickt (Lockstich/Plainstich) oder geflochten, während die Innenschichten 103-1 und 103-2 von dem umfangstabilen Stützdorn 105 im Inneren abgestützt werden. Zudem umfasst der Schlauchrohling 101 eine weitere Zwischenschicht 109 als Zwischenlage, die auf den textilen Druckträger 107-1 aufgebracht ist.

Das Material der beiden umgebenden Zwischenschichten durchdringt die Maschen des textilen Druckträgers 107-1. Oberhalb der Zwischenschicht 109 ist ein weiterer textiler Druckträger 107-2 aufgestrickt. Während des Aufstrickens wird die Zwischenschicht 109 ebenfalls von dem umfangstabilen Stützdorn 105 abgestützt. Die Zwischenschicht 109 dient zudem als Abstandshalter zwischen den Druckträgern 107-1 und 107-2. Als Außenschicht umfasst der Schlauchrohling 101 eine Deckschicht 111.

Die Druckträger 107-1 und 107-2 sind beispielsweise aus aromatischen Polyamiden (meta-Aramid, para-Aramid), Polymeren mit Esterfunktion (PES), Glasfaser, Polyoxadiazol POD oder Draht gebildet. Die Gesamtdicke aller Schichten zusammen beträgt ca. 5 mm. Die Dicke der Einzelschicht, wie beispielsweise der Zwischenschicht 109 oder Decksicht 111, beträgt ca. 1 mm - 2 mm. Die Dicke der Sperrschicht 103-1 beträgt ca. 0,8 mm. Die Innenschicht 103-2, die Zwischenschicht 109 und die Deckschicht 111 sind beispielsweise aus Silikon-Kautschuk VMQ, chloriertem Polyethylen-Kautschuk CM, Chloropren-Kautschuk CR, Polyacrylat-Kautschuk ACM, Hochtemperatur-Polyethylacrylat HT-ACM, Ethylen-Acrylat-Kautschuk AEM und/oder Ethylenoxid-Epichlorhydrin-Kautschuk ECO gebildet.

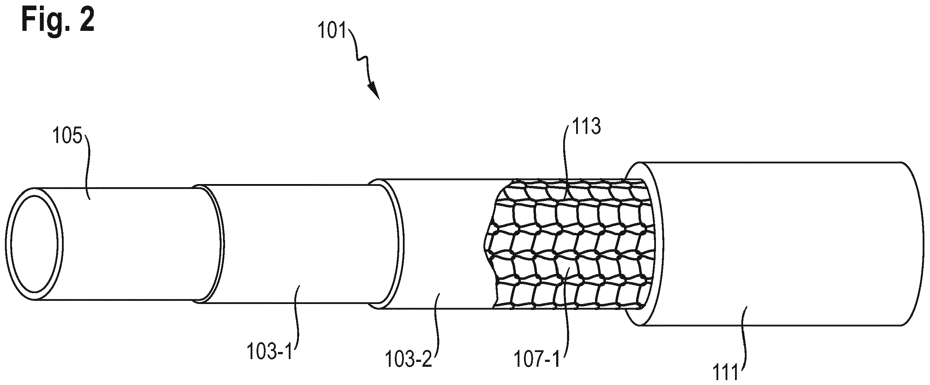

Fig. 2 zeigt eine schematische Ansicht eines weiteren Schlauchrohlings 101. Der Schlauchrohling 101 umfasst eine erste Innenschicht 103-1, die vorzugsweise als säurebeständige Sperrschicht ausgebildet sein kann und eine zweite Innenschicht 103-2, die als Zwischenschicht ausgebildet ist. Die Innenschichten 103-1 und 103-2 werden auf einem Stützdorn 105 extrudiert. Weiter umfasst der Schlauchrohling 101 einen textilen Druckträger 107-1 in Form eines Gestricks aus dem Faden 113. Der textile Druckträger 107-1 des Schlauchrohlings 101 wird von Außen auf die Innenschicht 103-2 aufgestrickt, während diese von dem umfangstabilen Stützdorn 105 im Inneren abgestützt wird. Als Außenschicht umfasst der Schlauchrohling 101 ebenfalls eine Deckschicht 111.

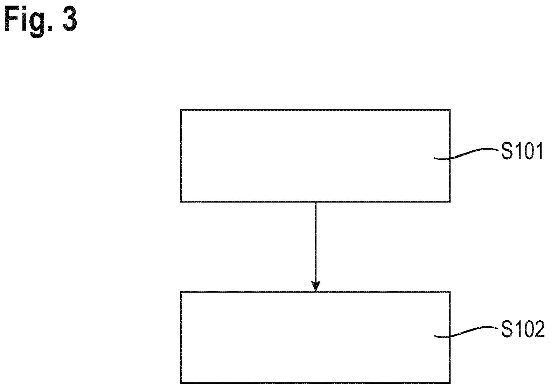

Fig. 3 zeigt ein Blockdiagramm des Verfahrens zur Herstellung des Schlauchrohlings 101. In einem ersten Schritt S101 wird zumindest eine Innenschicht 103-1, 103-2 des Schlauchrohlings 101 auf den umfangsstabilen Stützdorn 105 extrudiert. Anschließend wird in einem zweiten Schritt S102 ein textiler Druckträger 107-1 des Schlauchrohlings 101 auf die Innenschicht 103-2 aufgestrickt, die von Innen von dem umfangstabilen Stützdorn 105 abgestützt wird. In gleicher Weise können danach weitere Zwischen- oder Deckschichten oder textile Druckträger aufgebracht werden.

Nach dem Aufbringen einer Deckschicht des Schlauchrohlings 101 kann ein Kompressionsband um den Schlauchrohling 101 gewickelt werden. Dadurch können chemische Reaktionen zwischen den Einzelschichten gefördert werden und ein Durchdringen der Maschen des textilen Druckträgers 107-1 mit dem Material der Einzelschichten erhöht werden. Nach einer gewissen Zeit der Lagerung des Schlauchrohlings 101 kann das Kompressionsband vor einer Weiterverarbeitung des Schlauchrohlings 101 wieder entfernt werden.

Der Aufbau der Einzelschichten des Schlauchrohlings 101 kann im Allgemeinen sowohl kontinuierlich als auch diskontinuerlich erfolgen. Für die einzelnen Schichten sind Grundsätzlich alle ladelufttypischen Elastomermaterialien einsetzbar, wie beispielsweise Ethylen-Acrylat-Kautschuk AEM oder Silikon.

Im Allgemeinen können alle Schichtkombinationen verwendet werden, die sich hinsichtlich eines Materials, einer Anzahl von Einzelschichten oder der Schichtstärken unterscheiden können. Die Einzelschichten können eine säurebeständige Sperrschicht umfassen. Das Material des Stützdorns 105 wird so gewählt, dass es keine Verbindung zur Innenschicht 103-1 des Schlauchrohlings 101 eingeht. Bei dem Material des Stützdorns 105 kann es sich um einen wiederverwertbaren Kunststoff handeln, wie beispielsweise auf Polyolefin-, Polyamid-, Polyvinyliden- oder Elastomerbasis.

Der Schlauchrohling 101 kann in Linie auf den biegeflexiblen Stützdorn 105 extrudiert werden. Der Außendurchmesser des Stützdorns 105 entspricht dem Innendurchmesser des herzustellenden Schlauchrohlings 101. Der Schlauchrohling 101 kann je nach Anwendungsfall sowohl vorvernetzt als auch nicht vorvernetzt weiterverarbeitet werden.

Der Stützdorn 105 verbleibt bis unmittelbar vor der Weiterverarbeitung im Schlauchrohling 101. Durch Einsatz des Stützdorns 105 kann eine Komprimierung der darunterliegenden Schichten beim Einstricken verhindert werden. Dadurch lässt sich der Schlauchrohling 101 mit einer höheren Präzision herstellen. Des Weiteren lässt sich hierdurch eine gezielte Fadenspannung erzielen. Insbesondere bei Anwendungen mit hohen Temperaturen und hohen Drücken, beispielsweise höher als 3 Bar, lassen sich Vorteile und Abgrenzungen zur dornloser Fertigung erreichen.

Die Fadenspannungen der einzelnen Lagen der Druckträger 107-1 und 107-2 sind unterschiedlich einstellbar und steuerbar. Die Fadenspannungen können in Kombination mit unterschiedlichen Strickbildern oder Garnvarianten, wie beispielsweise Draht, bei mehrlagigen Druckträgern verwendet werden.

Durch das Verfahren wird der Vorteil erreicht, dass ein definiertes Volumenzunahmeverhalten unter Druckbeanspruchung beim Aufstricken der Druckträger 107-1 und 107-2 erreicht wird. Der Schlauchrohling 101 weist ein reproduzierbares Teilegewicht durch engere Fertigungstoleranzen und eine verbesserte Lagerstabilität vor einer Vulkanisation auf. Der Durchmesser und die Einzelschichten des Schlauchrohlings 101 können durch das Verfahren prozesssicher kalibriert werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 101: Schlauchrohling
- 103-1: Innenschicht
- 103-2: Innenschicht
- 105: Stützdorn
- 107-1: Druckträger
- 107-2: Druckträger
- 109: Zwischenschicht
- 111: Deckschicht
- 113: Faden
- S101: Verfahrensschritt
- S102: Verfahrensschritt

## Patentansprüche

1. Verfahren zur Herstellung eines Schlauchrohlings, mit den Schritten:
Extrudieren (S101) zumindest einer Innenschicht (103-1, 103-2) des Schlauchrohlings (101) auf einen umfangsstabilen Stützdorn (105);
Aufstricken (S102) eines textilen Druckträgers (107-1) des Schlauchrohlings (101) auf die Innenschicht (103-2), die von dem umfangstabilen Stützdorn (105) abgestützt wird;
Aufbringens einer Zwischenschicht (109) des Schlauchrohlings (101) auf den textilen Druckträger (107-1); und
Aufstrickens eines weiteren textilen Druckträgers (107-2) auf die Zwischenschicht (109), die von dem umfangstabilen Stützdorn (105) abgestützt wird, wobei ein Faden (113) des ersten textilen Druckträgers (107-1) und ein Faden (113) des weiteren textilen Druckträgers (107-2) unterschiedliche Materialien umfassen.

2. Verfahren nach Anspruch 1, wobei eine Fadenspannung des ersten textilen Druckträgers (107-1) unterschiedlich zu der Fadenspannung des weiteren textilen Druckträgers (107-2) ist.

3. Verfahren nach Anspruch 2, wobei die Fadenspannung des ersten textilen Druckträgers (107-1) geringer als die Fadenspannung des weiteren textilen Druckträgers (107-2) ist.

4. Verfahren nach einem der Ansprüche 1 bis 3, wobei ein Strickbild des ersten textilen Druckträgers (107-1) unterschiedlich zu dem Strickbild des weiteren textilen Druckträgers (107-2) ist.

5. Verfahren nach einem der Ansprüche 1 bis 4, weiter mit dem Schritt eines Aufbringens einer Deckschicht (111) auf den weiteren textilen Druckträger (107-2).

6. Verfahren nach Anspruch 5, weiter mit dem Schritt eines Umwickelns der Deckschicht (111) des Schlauchrohlings (101) mit einem Kompressionsband.

7. Verfahren nach Anspruch 6, weiter mit dem Schritt eines Entfernens des Kompressionsbandes unmittelbar vor einer Weiterverarbeitung des Schlauchrohlings (101) zur Formgebung.

8. Verfahren nach einem der vorangehenden Ansprüche, weiter mit dem Schritt eines Entfernens des Stützdorns (105) unmittelbar vor Weiterverarbeitung zur Formgebung des Schlauchrohlings.

9. Verfahren nach einem der vorangehenden Ansprüche, wobei der Stützdorn (105) aus einem Stahl oder Kunststoff gebildet ist.

10. Verfahren nach einem der vorangehenden Ansprüche, wobei der Stützdorn (105) biegesteif ist.

11. Verfahren nach einem der vorangehenden Ansprüche, wobei der Stützdorn (105) durch einen zylindrischen Hohlkörper gebildet wird.

12. Schlauchrohling (100), der mit einem Verfahren nach einem der Ansprüche 1 bis 11 hergestellt worden ist.

## Claims

1. Method for fabricating a hose blank, comprising the steps of:
extruding (S101) at least one inner layer (103-1, 103-2) of the hose blank (101) on a circumferentially stable support mandrel (105); and
knitting (S102) a textile print carrier (107-1) of the hose blank (101) on the inner layer (103-2), which is supported by the circumferentially stable support mandrel (105);
applying an intermediate layer (109) of the hose blank (101) on the textile print carrier (107-1); and
knitting a further textile print carrier (107-2) on the intermediate layer (109), which is supported by the circumferentially stable support mandrel (105), wherein a thread (113) of the first textile print carrier (107-1) and a thread (113) of the further textile print carrier (107-2) comprise different materials.

2. Method according to claim 1, wherein a thread tension of the first textile print carrier (107-1) is different from the thread tension of the further textile print carrier (107-2).

3. Method according to claim 2, wherein the thread tension of the first textile print carrier (107-1) is lower than the thread tension of the further textile print carrier (107-2).

4. Method according to any one of claims 1 to 3, wherein a knitting pattern of the first textile print carrier (107-1) is different from the knitting pattern of the further textile print carrier (107-2).

5. Method according to any one of claims 1 to 4, further comprising the step of applying a cover layer (111) on the further textile print carrier (107-2).

6. Method according to claim 5, further comprising the step of wrapping the cover layer (111) of the hose blank (101) with a compression band.

7. Method according to claim 6, further comprising the step of removing the compression band immediately before a further processing of the hose blank (101) for shaping.

8. Method according to any one of the preceding claims, further comprising the step of removing the support mandrel (105) immediately before further processing for shaping the hose blank.

9. Method according to any one of the preceding claims, wherein the support mandrel (105) is formed of a steel or plastic.

10. Method according to any one of the preceding claims, wherein the support mandrel (105) is rigid.

11. Method according to any one of the preceding claims, wherein the support mandrel (105) is formed by a cylindrical hollow body.

12. Hose blank (100), which is fabricated by a method according to any one of claims 1 to 11.

## Revendications

1. Procédé de fabrication d'une ébauche de tuyau, comprenant les étapes suivantes :
extrusion (S101) d'au moins une couche intérieure (103-1, 103-2) de l'ébauche de tuyau (101) sur un mandrin de support (105) de périphérie stable ;
tricotage (S102) d'un support de compression textile (107-1) de l'ébauche de tuyau (101) pardessus la couche intérieure (103-2) qui est supportée par le mandrin de support (105) de périphérie stable ;
application d'une couche intermédiaire (109) de l'ébauche de tuyau (101) sur le support de compression textile (107-1) ; et
tricotage d'un support de compression textile supplémentaire (107-2) sur la couche intermédiaire (109) qui est supportée par le mandrin de support (105) de périphérie stable, un fil (113) du premier support de compression textile (107-1) et un fil (113) du support de compression textile supplémentaire (107-2) comprenant des matériaux différents.

2. Procédé selon la revendication 1, dans lequel une tension du fil du premier support de compression textile (107-1) est différente de la tension du fil du support de compression textile supplémentaire (107-2).

3. Procédé selon la revendication 2, dans lequel la tension du fil du premier support de compression textile (107-1) est inférieure à la tension du fil du support de compression textile supplémentaire (107-2).

4. Procédé selon l'une quelconque des revendications 1 à 3, dans lequel un schéma de tricotage du premier support de compression textile (107-1) est différent du schéma de tricotage du support de compression textile supplémentaire (107-2).

5. Procédé selon l'une quelconque des revendications 1 à 4, comprenant en outre l'étape d'application d'une couche de recouvrement (111) sur le support de compression textile supplémentaire (107-2).

6. Procédé selon la revendication 5, comprenant en outre l'étape d'enroulement de la couche de recouvrement (111) de l'ébauche de tuyau (101) avec une bande de compression.

7. Procédé selon la revendication 6, comprenant en outre l'étape d'enlèvement de la bande de compression immédiatement avant un traitement ultérieur de l'ébauche de tuyau (101) en vue de son façonnage.

8. Procédé selon l'une quelconque des revendications précédentes, comprenant en outre l'étape d'enlèvement du mandrin de support (105) immédiatement avant le traitement ultérieur en vue du façonnage de l'ébauche de tuyau.

9. Procédé selon l'une quelconque des revendications précédentes, dans lequel le mandrin de support (105) est formé d'acier ou de plastique.

10. Procédé selon l'une quelconque des revendications précédentes, dans lequel le mandrin de support (105) est rigide en flexion.

11. Procédé selon l'une quelconque des revendications précédentes, dans lequel le mandrin de support (105) est formé par un corps creux cylindrique.

12. Ébauche de tuyau (100) qui a été fabriquée avec un procédé selon l'une quelconque des revendications 1 à 11.
